# NEUE EUROPÄISCHE PATENTSCHRIFT

(11) **EP 1 525 272 B2**
(45) Veröffentlichungstag und Bekanntmachung des Hinweises auf die Entscheidung über den Einspruch: **30.11.2011**
(45) Hinweis auf die Patenterteilung: 31.01.2007
(21) Anmeldenummer: 03792207.7
(22) Anmeldetag: 17.07.2003
(51) Int. Cl.: C09D 5/44

(54) **VERWENDUNG VON BISMUTVERBINDUNGEN ALS BAKTERIZID IN WÄSSRIGEN ELEKTROTAUCHLACKEN**
USE OF BISMUTH COMPOUNDS AS BACTERICIDE IN AQUEOUS ELECTRODEPOSITION PAINTS
UTILISATION DE COMPOSES A BASE DE BISMUTH COMME BACTERICIDES DANS LES PEINTURES AQUEUSES ELECTROPHORETIQUES PAR IMMERSION

(30) Priorität: 08.08.2002 DE 10236347
(43) Veröffentlichungstag der Anmeldung: 27.04.2005
(73) Patentinhaber: BASF Coatings GmbH, 48165 Münster (DE)
(72) Erfinder: GROSSE-BRINKHAUS, Karl-Heinz, 48301 Nottuln (DE); OTT, Günther, 48167 Münster (DE); REUTER, Hardy, 48167 Münster (DE); KOEBBERT, Hans-Otto, 48324 Sendenhorst (DE)
(74) Vertreter: Leifert & Steffan
(86) Internationale Anmeldenummer: PCT/EP2003/007747
(87) Internationale Veröffentlichungsnummer: WO 2004/018570

(56) Entgegenhaltungen:
- WO-A1-93/01818
- WO-A1-98/11169
- DE-A1- 10 001 222
- JP-A- 1 111 641
- JP-A- 9 157 550
- US-A- 3 239 411
- US-A- 5 972 189
- US-A- 6 124 380
- US-A- 6 156 823
- US-B1- 6 333 367
- DATABASE WPI Section Ch, Week 200107 Derwent Publications Ltd., London, GB; Class A25, AN 2001-053850 XP002276983 & JP 2000 290542 A (NIPPON OILS & FATS CO LTD), 17. Oktober 2000 (2000-10-17)
- W. ZIMMERMANN: 'Oligodynamische Silberwirkung' ZEITSCHRIFT FÜR HYGIENE Bd. 135, 1952, Seiten 403 - 413

## Beschreibung

Die vorliegende Erfindung betrifft die Verwendung von Bismutverbindungen als Bakterizid in wäßrigen Elektrotauchlacken.

Bei wäßrigen Beschichtungsmitteln sowie den zur Herstellung dieser Beschichtungsmittel eingesetzten wäßrigen Komponenten, wie z.B. Bindemitteldispersionen, Pigmentpasten u.a., besteht insbesondere aus Umweltgesichtspunkten der Wunsch nach einem möglichst niedrigen Lösemittelgehalt. Außer dem gewünschten Effekt einer geringeren Belastung der Umwelt führt die Reduzierung des Lösemittelgehaltes jedoch auch zu Problemen. So tritt beispielsweise vermehrt das Problem des Bakterien- und/oder Pilzbefalls dieser wäßrigen Systeme auf (s. Wolfgang Siegert in Farbe + Lack 99, Jahrgang, Heft 1, 1992 Seite 37 bis 39).

Auch auf dem Gebiet der Elektrotauchlacke stellt beispielsweise der Bakterien- bzw. Pilzbefall der mit dem Elektrotauchlack befüllten Becken ein schwerwiegendes Problem dar. Probleme bereitet aber auch der Bakterien- bzw. Pilzbefall der in den Elektrotauchlackierverfahren eingesetzten weiteren Komponenten, wie z.B. des Ultrafiltrats, des Rezirkulats, des Anolyten, des Kompensats etc. Hierdurch bedingt kann es zu den verschiedenartigsten Problemen kommen, wie z.B. Oberflächenstörungen im abgeschiedenen Lackfilm, verschlechtertem Verlauf, und Koagulation des Elektrotauchlackes.

Es sind daher verschiedene Maßnahmen zur Erhöhung der Bakterienrestistenz der Elektrotauchlacke ergriffen worden. Problematisch ist dabei jedoch, daß durch die gewünschte Erzielung der bakteriziden bzw. fungiziden Wirkung die anderen Eigenschaften der Elektrotauchlacke nicht verschlechtert werden dürfen.

Zur Erhöhung der Bakterienresistenz kann beispielsweise die üblicherweise zur Neutralisation des Bindemittels eingesetzte Milchsäure durch biologisch weniger leicht abbaubare Säuren, wie z.B. Essigsäure, Ameisensäure oder anorganische Säuren, ersetzt werden. Oftmals reicht dieser Säureaustausch zur Beseitigung der durch den Bakterien- bzw. Pilzbefall verursachten Probleme jedoch nicht aus.

Es können ferner den Elektrotauchlacken biozide Additive, wie z.B. Formaldehyd oder Isothiazolinone, zugesetzt werden (vgl. den Vortrag von Siegfried Kuhpal, »Mikrobielle Probleme in der Elektrotauchlackierung (ETL)«, ADVANCES IN COATINGS, 2. Symposium, 7. bis 9. November 1995, »Gebindekonservierung - im Spannungsfeld Mensch-UmweltTechnik«). Ferner besteht auch die Möglichkeit, bakterizide Strukturen in die eingesetzten Bindemittel einzubauen. Die Modifizierung der Bindemittel zur Erzielung der bakteriziden bzw. fungiziden Wirkung kann jedoch ebenso wie der Zusatz biozider Additive eine Verschlechterung anderer Eigenschaften der Elektrotauchlacke zur Folge haben. Außerdem kann es beispielsweise leicht zum Befall des Elektrotauchlackes mit Bakterien oder Pilzen kommen, die gegen die modifizierten Bindemittel resistent sind. Die dann erforderliche Anpassung der Bindemittel an diese neu aufgetretenen Bakterien bzw. Pilze ist zeit- und kostenintensiv.

Aus der Patentschrift EP-A 0 925 334 ist der Zusatz von Silber bzw. Silber-ionen als Bakterizid in Elektrotauchlacken bekannt. Jedoch kann es hierbei zu kolloidalen Silberabscheidungen kommen, die ihrerseits die Stabilität der Bindemittel und/oder der Elektrotauchlacke beeinträchtigen.

In der Patentschrift EP 0 509 437 B1 ist der Einsatz von Bismut- oder Zirconiumverbindungen neben Dialkylzinncarboxylaten zur Verbesserung des Korrosionsschutzes beschrieben. Ein Hinweis auf eine bakterizide Wirkung ist nicht zu entnehmen.

Die Patentschrift EP 0 642 558 B1 beschreibt katalysierte kationische Lackbindemittel, die Bismutsalze der Milchsäure und/oder der Dimethylolpropionsäure enthalten. Ein Hinweis auf eine bakterizide Wirkung ist dieser Patentschrift nicht zu entnehmen.

Aus der europäischen Patentanmeldung EP 0 690 106 A 1 sind wasserlösliche Bismutverbindungen enthaltende Zusammensetzungen bekannt, die als Katalysatoren für die Härtung von ETL geeignet sind. Sie enthalten ein Epoxid-Amin-Addukt in einer solchen Menge, daß das Verhältnis der Anzahl der Bismut-Atome zur Anzahl der beta-Hydroxyamingruppen des Epoxid-Amin-Addukts 1 : 10 bis 10 : 1 beträgt. Die zur Herstellung der Bismutverbindungen verwendete Säure wird in einer solchen Menge eingesetzt, daß auf 1 Mol Bismut zwischen 0,1 und weniger als 2 Mol dissoziierbare Protonen kommen. In den Beispielen wird ausschließlich ein Bismut-Salz der Dimethylolpropionsäure verwendet. Angaben zu einer bakteriziden Wirkung werden nicht gemacht.

Die Patentschrift US 6,156,823 offenbart die Bereitstellung eines Metallkatalysators (Bismuttrioxid) für die Vernetzungsreaktion in einem Elektrotauchlack, der akzeptable katalytische Aktivität aufweist, ökologisch akzeptabel ist, in einem Elektrotauchlack gut dispergierbar ist und keine weiteren Metalkatalysatoren braucht, um aktiv zu sein. Ein Hinweis auf eine bakterizide Wirkung ist dieser Patentschrift nicht zu entnehmen.

Die Patentschrift US 5,972,189 offenbart elektrisch abscheidbare Zusammensetzungen enthaltend (u.a.) Bismutdiorganodithiocarbamat, die akzeptable Ansprechzeiten der Härtungsreaktion ohne einhergehenden Verlust der Filmeigenschaften oder des Aussehens zeigen und die vorzugsweise keine Zinn- oder Bleikatalysatoren enthalten. In diesem Zusammenhang wird die katalytische Wirkung des Bismutdiorganodithiocarbamats für die Vernetzungsreaktion beschrieben, ein Hinweis auf eine bakterizide Wirkung ist dieser Patentschrift nicht zu entnehmen.

Die Patentschrift US 6,124,380 offenbart die Bereitstellung von Katalysatoren, die zur Tieftemperaturhärtung von blockierten Isocyanaten und Isothiocyanaten eingesetzt werden können. Für diese Vernetzungsreaktion können hierbei verschiedene Katalysatoren eingesetzt werden. In diesem Zusammenhang wird auch die Verwendung von Bismutverbindungen als mögliche Katalysatoren genannt. Hinweise bezüglich der bakteriziden Wirkung werden nicht genannt.

Aus der deutschen Patentschrift DE 43 30 002 C1 ist die Verwendung von Bismutsalzen organischer Carbonsäuren als Katalysator für einen Elektrotauchlack bekannt, bei dessen Verwendung ein vereinfachtes Verfahren zur Herstellung einer korrosionsschützenden Lackierung mittels Elektrotauchlackierung ermöglicht wird. Neben den Bismutverbindungen werden keine weiteren Katalysatoren eingesetzt. Desweiteren fehlen auch hier nähere Angaben zu einer bakteriziden Wirkung von Bismutverbindungen.

Die Patentschrift US 6,333,367 B1 beschreibt die Bereitstellung eines kationisch abscheidbaren Elektrotauchlacks, enthaltend u.a. eine Bismutkomponente, der gute Badstabilität aufweist, und einen Überzug mit guten Eigenschaften im Hinblick auf Korrosionsbeständigkeit, Witterungsbeständigkeit und Aussehen ergibt. Ein Hinweis auf eine bakterizide Wirkung der Bismutkomponente ist dieser Patentschrift nicht zu entnehmen.

Die Patentschrift JP 2000290542 A beschreibt die Bereitstellung eines Elektrotauchlackes, der auch ohne Verwendung von Blei oder Zinn eine ausreichende Härtbarkeit aufweist und gleichzeitig zu einem Film mit guter Korrosions- und Witterungsbeständigkeit führt. Hierzu werden Zusammensetzungen eingesetzt, die u.a. eine Verbindung ausgewählt aus Bismutsilicomolybdat, Bismuthydroxid und Zirkoniumverbindungen enthalten. Ein Hinweis auf eine bakterizide Wirkung der Bismutkomponente ist dieser Patentschrift nicht zu entnehmen.

In der deutschen Patentanmeldung DE 44 34 593 A1 ist der Einsatz von Bismutsalzen organischer Carbonsäuren in einem Elektrotauchlack beschrieben, der in Kombination mit einer nickel- und/oder chromfreien Vorbehandlung eine korrosionsschützende Lackierung ermöglicht, bei der toxische Bestandteile weitgehend vermieden werden. Hinweise auf eine bakterizide Wirkung sind der Patentschrift nicht zu entnehmen.

Aufgabe der vorliegenden Erfindung ist es, Elektrotauchlacke (ETL) zu finden, welche eine Bakterienresistenz aufweisen, ohne daß andere Eigenschaften wie Stabilität und Teilchengröße der Bindemitteldispersion oder Oberflächengüte der abgeschiedenen Elektrotauchlacke negativ beeinflußt werden.

Im Hinblick auf den Stand der Technik und angesichts der Vielzahl bekannter Bakterizide und Fungizide war es überraschend und für den Fachmann nicht vorhersehbar, daß die der Erfindung zugrunde liegende Aufgabe mit Hilfe der erfindungsgemäßen Elektrotauchlacke gelöst werden konnte.

Insbesondere war es überraschend, daß die erfindungsgemäßen ETL sich einfach herstellen ließen, lagerstabil waren, eine optimale Teilchengröße der dispergierten Bestandteile aufwiesen, sehr gut filtrierbar und ausgesprochen resistent gegenüber dem Befall durch Mikroorganismen waren. Sie ließen sich in einfacher Weise problemlos elektrophoretisch auf elektrisch leitfähigen Substraten abscheiden. Die resultierenden Elektrotauchlackierungen hatten einen guten Verlauf, waren frei von Oberflächenstörungen und Stippen und boten einen hervorragenden Korrosionsschutz und Kantenschutz. Desweiteren konnten die abgeschiedenen, nicht oder nur partiell gehärteten Schichten der erfindungsgemäßen ETL problemlos naß-in-naß mit wäßrigen Beschichtungsstoffen, wie Wasserprimer oder Wasserfüller, störungsfrei überschichtet und danach gemeinsam mit diesen eingebrannt werden.

Demgemäß besteht die Verwendung von mindestens einer Bismutverbindung, bevorzugt ausgewählt aus der Gruppe der Bismutcarboxylate in Elektrotauchlacken zur Vergrößerung der Resistenz der Elektrotauchlacke gegenüber dem Befall durch Mikroorganismen bzw. in der Verwendung der Bismutverbindung, bevorzugt ausgewählt aus der Gruppe der Bismutcarboxylate als Bakterizid für Elektrotauchlacke (ETL).

Besonders vorteilhafte Effekte ergeben sich dabei bei einer solchen Verwendung von Bismutcarboxylaten in Elektrotauchlacken, wenn die Bismutcarboxylate aus Carbonsäuren gebildet werden, welche aus der Gruppe der aliphatischen Carbonsäuren, welche bevorzugt außer der Carbonsäure keine weitere funktionelle Gruppe aufweisen und der aromatischen Carbonsäuren ausgewählt sind.

Die Bismutcarboxylate werden dabei bei einer solchen Verwendung in einer Menge von 0,1 bis 4 Gew.-%, bezogen auf den Festkörper des Elektrotauchlackes, eingesetzt.

Ebenfalls von der vorliegenden Erfindung umfaßt wird ein Verfahren zur Herstellung von Elektrotauchlacken mit vergrößerter Resistenz gegenüber dem Befall durch Mikroorganismen, das dadurch gekennzeichnet ist, daß man mindestens eine Bismutverbindung, bevorzugt ausgewählt aus der Gruppe der Bismutcarboxylate zu einem herkömmlichen Elektrotauchlack hinzufügt.

Die erfindungsgemäßen ETL weisen vorzugsweise einen Festkörpergehalt von 5 bis 50, bevorzugt 5 bis 35, Gew.-% auf. Hierbei ist unter »Festkörper« der Anteil eines ETL zu verstehen, der die hieraus hergestellte Elektrotauchlackierung aufbaut. Die erfindungsgemäßen ETL enthalten mindestens ein Bindemittel (A).

Die Bindemittel (A) können selbstvemetzend und/oder fremdvemetzend sein.

Selbstvemetzende Bindemittel (A) enthalten reaktive funktionelle Gruppen, die mit sich selbst und/oder mit in den selbstvemetzenden Bindemitteln (A) vorhandenen komplementären reaktiven funktionellen Gruppen thermische Vemetzungsreaktionen eingehen können.

Fremdvemetzende Bindemittel (A) enthalten reaktive funktionelle Gruppen, die mit in Vernetzungsmitteln (B) vorhandenen komplementären reaktiven funktionellen. Gruppen thermische Vernetzungsreaktionen eingehen können.

Vorzugsweise wird mindestens ein fremdvemetzendes Bindemittel (A) in Kombination mit mindestens einem Vernetzungsmittel (B) eingesetzt.

Das Bindemittel (A) enthält potentiell kationische und/oder kationische Gruppen. Bindemittel (A) dieser Art werden in kathodisch abscheidbaren Elektrotauchlacken (KTL) eingesetzt.

Beispiele geeigneter potentiell kationischer Gruppen, die durch Neutralisationsmittel und/oder Quartemisierungsmittel in Kationen überführt werden können, sind primäre, sekundäre oder tertiäre Aminogruppen, sekundäre Sulfidgruppen oder tertiäre Phoshingruppen, insbesondere tertiäre Aminogruppen oder sekundäre Sulfidgruppen.

Beispiele geeigneter kationischer Gruppen sind primäre, sekundäre, tertiäre oder quarternäre Ammoniumgruppen, tertiäre Sulfoniumgruppen oder quarternäre Phosphoniumgruppen, vorzugsweise quarternäre Ammoniumgruppen oder tertiäre Sulfoniumgruppen, insbesondere aber quarternäre Ammoniumgruppen.

Beispiele geeigneter Neutralisationsmittel für die potentiell kationischen Gruppen sind anorganische und organische Säuren wie Schwefelsäure, Salzsäure, Phosphorsäure, Sulfonsäuren, wie z.B. Amidosulfonsäure oder Methansulfonsäure, Ameisensäure, Essigsäure, Milchsäure, Dimethylolpropionsäure oder Zitronensäure, insbesondere Ameisensäure, Essigsäure oder Milchsäure.

Beispiele geeigneter Bindemittel (A) für kathodisch abscheidbare Elektrotauchlacke (KTL) sind aus den Druckschriften EP 0 082 291 A 1, EP 0 234 395 A 1, EP 0 227 975 A 1, EP 0 178 531 A 1, EP 0 333 327, EP 0 310 971 A 1, EP 0 456 270 A 1, US 3,922,253 A, EP 0 261 385 A 1, EP 0 245 786 A 1, EP 0 414 199 A 1, EP 0 476 514 A 1, EP 0 817 684 A 1, EP 0 639 660A 1, EP 0 595 186 A 1, DE 41 26 476 A 1, WO 98/33835, DE 33 00 570 A 1, DE 37 38 220 A 1, DE 35 18 732 A 1 oder DE 196 18 379 A 1 bekannt. Hierbei handelt es sich vorzugsweise um primäre, sekundäre, tertiäre oder quarternäre Amino- oder Ammoniumgruppen und/oder tertiäre Sulfoniumgruppen enthaltende Harze (A) mit Aminzahlen vorzugsweise zwischen 20 und 250 mg KOH/g und einem gewichtsmittleren Molekulargewicht von 300 bis 10.000 Dalton. Insbesondere werden Amino(meth)acrylatharze, Aminoepoxidharze, Aminoepoxidharze mit endständigen Doppelbindungen, Aminoepoxiharze mit primären und/oder sekundären Hydroxylgruppen, Aminopolyurethanharze, aminogruppenhaltige Polybutadienharze oder modifizierte Epoxidharz-Kohlendioxid-Amin-Umsetzungsprodukte verwendet.

Beispiele geeigneter potentiell anionischer Gruppen, die durch Neutralisationsmittel in Anionen überführt werden können, sind Carbonsäure-, Sulfonsäure- oder Phosphonsäuregruppen, insbesondere Carbonsäuregruppen.

Beispiele geeigneter anionischer Gruppen sind Carboxylat-, Sulfonat- oder Phosphonatgruppen, insbesondere Carboxylatgruppen.

Beispiele für geeignete Neutralisationsmittel für die potentiell anionischen Gruppen sind Ammoniak, Ammoniumsalze, wie beispielsweise Ammoniumcarbonat oder Ammoniumhydrogencarbonat, sowie Amine, wie z.B. Trimethylamin, Triethylamin, Tributylamin, Dimethylanilin, Diethylanilin, Triphenylamin, Dimethylethanolamin, Diethylethanolamin, Methyldiethanolamin, Triethanolamin und dergleichen.

Beispiele geeigneter Bindemittel (A) für anodisch abscheidbare Elektrotauchlacke (ATL) sind aus der deutschen Patentanmeldung DE 28 24 418 A 1 bekannt. Hierbei handelt es sich vorzugsweise um Polyester, Epoxydharzester, Poly(meth)acrylate, Maleinatöle oder Polybutadienöle mit einem gewichtsmittleren Molekulargewicht von 300 bis 10.000 Dalton und einer Säurezahl von 35 bis 300 mg KOH/g.

Im allgemeinen wird die Menge an Neutralisationsmittel wird so gewählt, daß 1 bis 100 Äquivalente, bevorzugt 30 bis 90 Äquivalente der potentiell kationischen oder potentiell anionischen Gruppen eines Bindemittels (A) neutralisiert werden.

Beispiele geeigneter reaktiver funktioneller Gruppen sind Hydroxylgruppen, Thiolgruppen und primäre und sekundäre Aminogruppen, insbesondere Hydroxylgruppen.

Beispiele geeigneter komplementärer reaktiver funktioneller Gruppen sind blockierte Isocyanatgruppen, Hydroxymethylen- und Alkoxymethylengruppen, vorzugsweise Methoxymethylen- und Butoxymethylengruppen und insbesondere Methoxymethylengruppen. Bevorzugt werden blockierte Isocyanatgruppen verwendet. Beispiele geeigneter Blockierungsmittel sind die nachstehend beschriebenen.

Vorzugsweise werden KTL als ETL eingesetzt.

Der Gehalt der erfindungsgemäßen ETL an den vorstehend beschriebenen Bindemitteln (A) richtet sich vor allem nach ihrer Löslichkeit und Dispergierbarkeit im wäßrigen Medium und nach ihrer Funktionalität hinsichtlich der Vernetzungsreaktionen mit sich selbst oder den Bestandteilen (B) und kann daher vom Fachmann aufgrund seines allgemeinen Fachwissens gegebenenfalls unter Zuhilfenahme einfacher Vorversuche leicht festgelegt werden.

Als Vernetzungsmittel (B) kommen alle üblichen und bekannten Vernetzungsmittel in Betracht, die geeignete komplementäre reaktive funktionelle Gruppen enthalten. Vorzugsweise werden die Vernetzungsmittel (B) aus der Gruppe, bestehend aus blockierten Polyisocyanaten, Melamin-Formaldehyd-Harzen, Tris(alkoxycarbonyl-amino)triazinen und Polyepoxiden, ausgewählt. Bevorzugt werden die Vernetzungsmittel (B) aus der Gruppe, bestehend aus blockierten Polyisocyanaten und hoch reaktiven Melamin-Formaldehyd-Harzen, ausgewählt. Besonders bevorzugt werden die blockierten Polyisocyanate eingesetzt.

Die blockierten Polyisocyanate (B) werden aus üblichen und bekannten Lackpolyisocyanaten mit aliphatisch, cycloaliphatisch, araliphatisch und/oder aromatisch gebundenen Isocyanatgruppen hergestellt.

Bevorzugt werden Lackpolyisocyanate mit 2 bis 5 Isocyanatgruppen pro Molekül und mit Viskositäten von 100 bis 10.000, vorzugsweise 100 bis 5.000 und insbesondere 100 bis 2.000 mPas (bei 23°C) eingesetzt. Außerdem können die Lackpolyisocyanate in üblicher und bekannter Weise hydrophil oder hydrophob modifiziert sein.

Beispiele für geeignete Lackpolyisocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Annalen der Chemie, Band 562, Seiten 75 bis 136, beschrieben.

Weitere Beispiele geeigneter Lackpolyisocyanate sind Isocyanurat-, Biuret-, Allophanat-, Iminooxadiazindion-, Urethan-, Harnstoff-, Carbodiimid- und/oder Uretdiongruppen aufweisende Polyisocyanate, die aus üblichen und bekannten Diisocyanaten erhältlich sind. Vorzugsweise werden als Diisocyanate Hexamethylendiisocyanat, Isophorondiisocyanat, 2-Isocyanatopropylcyclohexylisocyanat, Dicyclohexylmethan-2,4'-diisocyanat, Dicyclohexylmethan-4,4'-diisocyanat oder 1,3-Bis(isocyanatomethyl)cyclohexan (BIC), Diisocyanate, abgeleitet von Dimerfettsäuren, 1,8-Diisocyanato-4-isocyanatomethyl-octan, 1,7-Diisocyanato-4-isocyanatomethyl-heptan, 1-Isocyanato-2-(3-isocyanatopropyl)cyclohexan, 2,4- und/oder 2,6-Toluylendiisocyanat, 4,4'-Diphenylmethandiisocyanat, Naphthalindiisocyanat oder Mischungen aus diesen Polyisocyanaten eingesetzt.

Beispiele für geeignete Blockierungsmittel zur Herstellung der blockierten Polyisocyanate (B) sind
i) Phenole, wie Phenol, Cresol, Xylenol, Nitrophenol, Chlorophenol, Ethylphenol, t-Butylphenol, Hydroxybenzoesäure, Ester dieser Säure oder 2,5-Di-tert.-butyl-4-hydroxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleinimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharnstoff, Ethylenhamstoff, Ethylenthioharnstoff oder 1,3-Diphenylharnstoff;
xi) Carbamate wie N-Phenylcarbamidsäurephenylester oder 2-Oxazolidon;
xii) Imine wie Ethylenimin;
xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, Imidazole oder Triazole; sowie
xvii) Gemische dieser Blockierungsmittel.

Der Gehalt der erfindungsgemäßen ETL an den vorstehend beschriebenen Vernetzungsmitteln (B) richtet sich vor allem nach ihrer Funktionalität hinsichtlich der Vemetzungsreaktionen mit den Bestandteilen (A) und kann daher vom Fachmann aufgrund seines allgemeinen Fachwissens gegebenenfalls unter Zuhilfenahme einfacher Vorversuche leicht festgelegt werden.

Erfindungsgemäß enthalten die ETL mindestens eine Bismutverbindung (C).
Bevorzugt werden Bismutcarboxylate eingesetzt.
Die einsetzbaren Bismutcarboxylate werden bevorzugt aus Carbonsäuren gebildet, welche aus der Gruppe der aliphatischen Carbonsäuren, welche bevorzugt außer der Carbonsäure keine weitere funktionelle Gruppe aufweisen und der aromatischen Carbonsäuren ausgewählt sind.
Eine bevorzugte Bismutverbindung ist Bismutethylhexanoat. Dieses wird z.B. von der Firma King Industries unter der Bezeichnung K-Kat 348 in Form einer Lösung vertrieben.
Eine weitere bevorzugte Bismutverbindung (C) ist das wasserunlösliche Bismutsubsalicylat der Summenformel C₇H₅O₄Bi. Es hat einen Bismutgehalt von 56 bis 60 Gew.-%. Das Bismutsubsalicylat (C) ist eine handelsübliche Verbindung und wird beispielsweise von der Firma MCP HEK GmbH, Lübeck, vertrieben.
Die erfindungsgemäßen ETL enthalt, bezogen auf ihren Festkörper, 0,1 bis 4, bevorzugt 0,1 bis 3,5 und insbesondere 0,15 bis 3 Gew.-% Bismutverbindungen (C).

Ein Vorteil der erfindungsgemäßen ETL ist es, daß die verschiedenen möglichen Bismutverbindungen, die erfindungsgemäß eingesetzt werden können, in Bindemittel bzw. Bindemitteldispersion und/oder Reibharz bzw. Reibharzdispersion sowohl fest, als auch flüssig (gelöst und/oder dispergiert) eingearbeitet werden können.

Darüber hinaus können die erfindungsgemäßen ETL noch mindestens einen üblichen und bekannten Zusatzstoff (D), ausgewählt aus der Gruppe, bestehend aus von Bismutverbindung (C) verschiedenen Katalysatoren; Pigmenten; Antikrateradditiven; Polyvinylalkoholen; thermisch härtbaren Reaktivverdünnern; molekulardispers löslichen Farbstoffen; Lichtschutzmitteln, wie UV-Absorbem und reversiblen Radikalfängern (HALS); Antioxidantien; niedrig- und hochsiedenden ("lange") organischen Lösemitteln; Entlüftungsmitteln; Netzmitteln; Emulgatoren; Slipadditiven; Polymerisationsinhibitoren; thermolabilen radikalischen Initiatoren; Haftvermittlern; Verlaufmitteln; filmbildenden Hilfsmitteln; Flammschutzmitteln; Korrosionsinhibitoren; Rieselhilfen; Wachsen; Sikkativen; Bioziden und Mattierungsmitteln, in wirksamen Mengen enthalten.

Weitere Beispiele geeigneter Zusatzstoffe (D) werden in dem Lehrbuch »Lackadditive« von Johan Bieleman, Wiley-VCH, Weinheim, New York, 1998, in D. Stoye und W. Freitag (Editors), »Paints, Coatings and Solvents«, Second, Completely Revised Edition, Wiley-VCH, Weinheim, New York, 1998, »14.9. Solvent Groups«, Seiten 327 bis 373, beschrieben.

Vorzugsweise werden Pigmente als Zusatzstoffe (D) eingesetzt. Vorzugsweise werden die Pigmente (D) aus der Gruppe, bestehend aus üblichen und bekannten farbgebenden, effektgebenden, elektrisch leitfähigen, magnetisch abschirmenden, fluoreszierenden, füllenden und korrosionshemmenden organischen und anorganischen Pigmenten, ausgewählt.

Die erfindungsgemäßen ETL werden durch Vermischen und Homogenisieren der vorstehend beschriebenen Bestandteile mit Hilfe üblicher und bekannter Mischverfahren und Vorrichtungen wie Rührkessel, Rührwerksmühlen, Extruder, Kneter, Ultraturrax, In-line-Dissolver, statische Mischer, Mikromischer, Zahnkranzdispergatoren, Druckentspannungsdüsen und/oder Microfluidizer hergestellt. Dabei werden die Pigmente vorzugsweise in der Form von Pigmentpasten oder Pigmentpräparationen in die ETL eingearbeitet (vgl. Römpp Lexikon Lacke und Druckfarben, Georg Thieme Verlag, Stuttgart, New York, 1998, »Pigmentpräparationen«, Seite 452). Die Verwendung von Bismutverbindungen (C) bewirkt eine ausgesprochen hohe Resistenz der erfindungsgemäßen ETL gegenüber dem Befall durch Mikroorganismen. Diese hohe Resistenz bleibt auch bei intensivem Betrieb der erfindungsgemäßen Elektrotauchlackbäder erhalten, bei dem große Mengen an frischer ETL und damit neue Nahrung für die Mikroorganismen zugeführt wird.

Die Applikation der erfindungsgemäßen ETL erfolgt in üblicher und bekannter Weise, indem ein elektrisch leitfähiges Substrat in ein erfindungsgemäßes Elektrotauchlackbad getaucht wird, das Substrat als Kathode oder Anode, vorzugsweise als Kathode, geschaltet wird, durch Gleichstrom eine ETL-Schicht auf dem Substrat abgeschieden wird, das beschichtete Substrat aus dem Elektrotauchlackbad entfernt wird und die abgeschiedene ETL-Schicht in üblicher und bekannter Weise thermisch gehärtet (eingebrannt) wird. Die resultierende Elektrotauchlackierung kann anschließend mit einem Füller oder einer Steinschlagschutzgrundierung und einem Unidecklack oder alternativ mit einem Basislack und einem Klarlack nach dem Naß-in-naß-Verfahren überschichtet werden. Die Füllerschicht oder Schicht aus der Steinschlagschutzgrundierung sowie die Unidecklackschicht werden vorzugsweise jede für sich eingebrannt. Die Basislackschicht und die Klarlackschicht werden vorzugsweise gemeinsam eingebrannt. Es resultieren Mehrschichtlackierungen mit hervorragenden anwendungstechnischen Eigenschaften

Des weiteren können Mehrschichtlackierungen auch nach dem Naß-in-naß-Verfahren hergestellt, bei denen die abgeschiedene ETL-Schicht nicht oder nur partiell thermisch gehärtet und gleich mit den weiteren Beschichtungsstoffen, insbesondere wäßrigen Beschichtungsstoffen, überschichtet wird, wonach sie mit mindestens einer der Schichten aus den Beschichtungsstoffen (ETL-Schicht + Füllerschicht; ETL-Schicht + Füllerschicht + Unidecklackschicht; ETL-Schicht + Füller-Schicht + Basislackschicht oder ETL-Schicht + Füller-Schicht + Basislackschicht + Klarlackschicht) gemeinsam eingebrannt wird. Auch hierbei resultieren Mehrschichtlackierungen mit hervorragenden anwendungstechnischen Eigenschaften, wobei die Herstellverfahren besonders wirtschaftlich und energiesparend sind. Dabei zeigt es sich, daß sich die erfindungsgemäßen ETL-Schichten besonders gut störungsfrei naß-in-naß überschichten lassen.

In allen Fällen werden erfindungsgemäße Elektrotauchlackierungen erhalten, die einen sehr guten Verlauf zeigen, frei von Oberflächenstörungen und Stippen sind und einen hervorragenden Korrosionsschutz und Kantenschutz bieten.

### Beispiele

### Beispiel 1:

### 1.1 Herstellung des Vernetzungsmittels V1

Der Polyurethanvemetzer wird analog zur Herstellung des Polyurethanvernetzers aus Beispiel 1 in DE 196 37 559 hergestellt aus einem Isomer und höherfunktionellen Oligomer auf Basis 4,4'-Diphenylmethandiisocyanat mit einem NCO-Equivalentgewicht von 135 g/eq (Lupranat® M 20 S der Firma BASF), indem von 6 Molen Isocyanat zunächst 4,3 Mole Isocyanat mit 4,3 Molen Butyldiglykol umgesetzt werden und die verbleibenden 1,7 Mole Isocyanat mit Trimethylolpropan umgesetzt werden.
Der Vemetzer liegt in einer 80%-igen Lösung aus Methylisobutylketon und Isobutanol (Gewichtsverhältnis 9:1) vor.

### 1.2 Herstellung der wäßrigen Bindemitteldispersion D1

In einem Reaktor, der mit einem Rührer, Rückflußkühler, Innenthermometer und Inertgaseinleitung ausgestattet ist, werden 682,4 Teile Epoxidharz auf Basis Bisphenol-A mit einem Epoxy-Equivalentgewicht (EEW) von 188 g/eq zusammen mit 198,4 Teilen Bisphenol-A, 252, 7 Teilen ethoxyliertem Bisphenol-A mit einer OH-Zahl von 222 (Dianol 265 der Firma Akzo) und 59,7 Teilen Methylisobutylketon unter Stickstoffatmosphäre auf 130°C aufgeheizt. Dann werden 1,6 Teile N,N-Dimethylbenzylamin zugegeben, auf 150°C aufgeheizt und für ca. 30 min bei einer Temperatur zwischen 150 und 190°C gehalten. Dann wird auf 140°C heruntergekühlt. Dann werden 2,1 Teile N,N-Dimethylbenzylamin zugegeben und die Temperatur solange gehalten, bis das EEW einen Wert von 1120 g/eq erreicht hat.
Nun gibt man 1011,3 Teile des Vemetzers V1 hinzu und die Temperatur wird auf 100°C erniedrigt. Anschließend wird eine Mischung aus 65,4 Teilen Diketimin (erhalten durch Umsetzung von Diethylentriamin und Methylisobutylketon, 75%-ig in Methylisobutylketon) und 59,7 Teilen Methylethanolamin zugegeben und die Reaktionstemperatur für ca. 1h bei 115°C gehalten, bis eine Viskosität von ca. 6 dPas erreicht ist (50%-ige Anlösung in Methoxypropanol, Kegel/Platte-Viskosimeter bei 23°C). Dann werden 64,8 Teile 1-Phenoxy-2-propanol zugegeben und die Reaktionsmischung wird in einer Mischung aus 60,9 Teilen Milchsäure (88%-ig), 15,2 Teilen Emulgatormischung (Mischung aus 1 Teil Butylglykol und 1 Teil eines tertiären Acetylenalkohols (Surfynol 104 von Air Products)) und 3026,6 Teilen entmineralisiertem Wasser dispergiert. Durch Destillation im Vakuum werden die flüchtigen Lösemittel entfernt und anschließend mengengleich durch entmineralisiertes Wasser ersetzt. Der Festkörpergehalt beträgt nach Destillation 37%, die Dispersion weist eine Teilchengröße von 150 nm auf.

Variante 1 (=D1.1): zu dieser Bindemitteldispersion D1 werden gegebenenfalls 5 ppm Silberionen, bezogen auf das Gesamtgewicht der Bindemitteldispersion, in Form einer wäßrigen 10%-igen Silbemitratlösung in entmineralisiertem Wasser zugesetzt.
Variante 2 (=D1.2): erfindungsgemäße werden der Dispersion während der Dispersionsstufe 200 ppm Bismut in Form einer handelsüblichen Bismutethylhexanoat-Lösung (K-Kat 348 von King-Industries) zugesetzt.

### Beispiel 2:

### 2.1 Herstellung des Vernetzungsmittels V2

In einem Reaktor, der mit einem Rührer, Rückflußkühler, Innenthermometer und Inertgaseinleitung ausgestattet ist, werden 1084 Teile Isomere und höherfunktionelle Oligomere auf Basis von 4,4'-Diphenylmethandiisocyanat mit einem NCO-Equivalentgewicht von 135 (Basonat® A270 der Firma BASF) unter Stickstoffatmosphäre vorgelegt. Man gibt 0,6 Teile Dibutylzinndilaurat zu und tropft 1314 Teile Butyldiglykol mit einer solchen Geschwindigkeit zu, daß die Produkttemperatur unter 70°C bleibt. Gegebenenfalls muß gekühlt werden. Die Temperatur wird weitere 120 Minuten bei 70°C gehalten. Bei der nachfolgenden Kontrolle sind keine NCO-Gruppen mehr nachweisbar. Man kühlt auf 70°C ab. Der Feststoffgehalt liegt bei >97%.

### 2.2 Herstellung der wäßrigen Bindemitteldispersion D2

In einem Reaktor, der mit einem Rührer, Rückflußkühler, Innenthermometer und Inertgaseinleitung ausgestattet ist, werden 1128 Teile eines handelsüblichen Epoxidharzes auf Basis Bisphenol-A mit einem Epoxy-Equivalentgewicht (EEW) von 188, 94 Teile Phenol, 228 Teilen Bisphenol-A, 252 vorgelegt und unter Stickstoffatmosphäre auf 130°C aufgeheizt. Unter Rühren werden 1,5 g Triphenylphosphin zugegeben, worauf einer exotherme Reaktion eintritt und die Temperatur auf 160°C steigt. Man läßt wieder auf 130°C abkühlen und kontrolliert anschließend das EEW. Der Sollwert liegt bei 478. Sodann werden 156,7 Teile Plastilit 3060 (BASF AG) unter gleichzeitiger Kühlung zugegeben. Bei 95°C gibt man 115,5 Teile Diethanolamin zu, worauf eine exotherme Reaktion eintritt. Nach 40 Minuten gibt man 61,2 Teile N,N'-Dimethylaminopropylamin zu. Nach kurzzeitiger Exothermie (140°C) läßt man den Ansatz für 2 Stunden bei 130°C weiterreagieren, bis die Viskosität konstant bleibt.
In das resultierende Reaktionsgemisch werden rasch 97,6 Teile Butylglykol und 812 Teile der 70°C warmen Lösung des Vemetzungsmittels V2 eingerührt und dann trägt man bei 105°C aus.
2400 Teile der resultierenden Mischung werden unverzüglich in eine vorgelegte Mischung aus 2173 Teilen entmineralisiertem Wasser und 49,3 Teilen Eisessig eindispergiert. Nach Zugabe von weiteren 751 Teilen entmineralisiertem Wasser resultierte eine stabile Dispersion mit den folgenden Kennzahlen:

| | |
|---|---|
| Festkörper (60min/130°C):45,1 | % |
| pH-Wert: | 5,9 |
| mittlere Teilchengröße: | 145 nm |

### 2.3 Herstellung der wäßrigen Bindemitteldispersion D2.1

Es wird wie unter 2.2 verfahren, jedoch werden nach Zugabe des Vernetzungsmittels zusätzlich noch 9 Teile Bismutethylhexanoat-Lösung (K-Kat 348 der Firma King Industries) zugegeben. Anschließend wird weiter wie unter 2.2 verfahren.
Man erhält eine Dispersion mit den folgenden Kennzahlen:

| | |
|---|---|
| Festkörper (60min/130°C):44,8% | |
| pH-Wert: | 5,8 |
| mittlere Teilchengröße: | 135 nm |

### 2.4 Herstellung der Reibharzlösung R1

Gemäß EP 0 505 445 B1, Beispiel 1.3, stellt man ein Reibharz her, das der besseren Handhabung wegen zusätzlich mit 2,82 Teilen Eisessig und 13,84 Teilen VE-Wasser neutralisiert und verdünnt wird. Der ursprüngliche Feststoffgehalt wird dadurch auf 60% abgesenkt.

### 2.5 Herstellung wäßriger Pigmentpasten

### 2.5.1 Pigmentpaste P1

Die folgenden Komponenten werden nacheinander zu einem schnellaufenden Dissolverrührwerk gegeben und 30 Minuten gemischt:

| | |
|---|---|
| 32,3 | Teile entmineralisiertes Wasser |
| 24,1 | Teile Reibharzlösung R1 |
| 5,6 | Teile Aluminiumsilikat Extender (ASP 200) |
| 0,6 | Teile Ruß |
| 33,8 | Teile Titandioxid (TI-Pure R 900, DuPont) |
| 3,8 | Teile Dibutylzinnoxid |

Anschließend wird die Mischung in einer Labor-Rührwerksmühle während 1 bis 2 Stunden zu einer Hegman-Feinheit von 12µm dispergiert und gegebenenfalls mit weiterem Wasser auf die gewünschte Verarbeitungsviskosität eingestellt.

### 2.5.2 Pigmentpaste P2

Gemäß dem Verfahren unter 2.5.1 wird die Pigmentpaste 2 hergestellt, allerdings werden zusätzlich 1,1 Teile Bismutethylhexanoat (Bi-Gehalt 26%) der Mischung zugegeben.
Alternativ können auch 0,5 Teile Bismutsubsalicylat (Bi-Gehalt 57%, HEK-Lübeck) zugesetzt werden.

### 2.6 Herstellung der Elektrotauchlacke

Zur Prüfung als kathodisch abscheidbare Elektrotauchlack werden die beschriebenen wäßrigen Bindemitteldispersionen und Pigmentpasten entsprechend der folgenden Tabelle kombiniert. Man verfährt dabei so, daß die Bindemitteldispersion vorgelegt und mit entionisiertem Wasser verdünnt wird. Anschließend wird unter Rühren die Pigmentpaste eingetragen. Die angegebenen Werte entsprechen den Gewichtsanteilen.

| Tauchlack Nr. | 1 | 2 | 3 |
|---|---|---|---|
| Bindemitteldispersion D2 | 2114 | | 2114 |
| Bindemitteldispersion D2.1 | | 2129 | |
| Pigmentpaste P1 | 294 | 294 | |
| Pigmentpaste P2 | | | 294 |
| Entmineralisiertes Wasser | 2592 | 2577 | 2592 |

### 3. Prüfung auf Bakterienresistenz

Die erfindungsgemäßen Bindemitteldispersionen (verdünnt auf 15% Festkörper) bzw. die erfindungsgemäßen Elektrotauchlackbäder wurden mit adaptierten Keimen aus kontaminiertem KTL-Badmaterial belastet. Dazu wurden jeweils 100ml der Probe mit 0,1 ml Burkholderia cepacia - Suspension inokuliert.
Die Proben werden für die gesamte Versuchsdauer auf einem Rundschüttler gerührt.

Nach jeweils 7 Tagen (= 1 Belastungszyklus) werden Ausstriche vorgenommen und die Keimzahl ermittelt.
In der folgenden Auswertung ist die Zahl der Belastungszyklen für die Bindemitteldispersion bzw. den Elektrotauchlack angegeben, nach denen eine deutliche Keimzahl im Ausstrich erkennbar wurde.

### 3.1 Bindemitteldispersionen

D1 1
D1.1 6
D1.2 >10
D2 4
D2.1 >10

### 3.2 Elektrotauchlacke

Tauchlack 1 4
Tauchlack 2 >10
Tauchlack 3 >10

## Patentansprüche

1. Verwendung von Bismutverbindungen als Bakterizid für Elektrotauchlacke (ETL), wobei die Elektrotauchlacke die Bismutverbindungen in einer Menge von 0,1 bis 4 Gew.-%, bezogen auf ihren Festkörper, enthälten.

2. Verwendung nach Anspruch 1, **dadurch gekennzeichnet, daß** die Bismutverbindungen aus der Gruppe der Bismutcarboxylate ausgewählt werden.

3. Verwendung nach Anspruch 1, **dadurch gekennzeichnet, daß** die Bismutcarboxylate aus Carbonsäuren gebildet werden, welche aus der Gruppe der aliphatischen Carbonsäuren und der aromatischen Carbonsäuren ausgewählt sind.

4. Verwendung nach Anspruch 3, **dadurch gekennzeichnet, daß** die aliphatischen Carbonsäuren außer der Carbonsäuregruppe keine weitere funktionelle Gruppe aufweisen.

5. Verwendung nach Anspruch 3 oder 4, **dadurch gekennzeichnet, daß** die Bismutverbindung Bismutethylhexanoat ist.

6. Verwendung nach Anspruch 3, **dadurch gekennzeichnet, daß** die Bismutverbindung Bismutsubsalicylat ist.

7. Verwendung nach Anspruch 6, **dadurch gekennzeichnet, daß** das Bismutsubsalicylat einen Bismutgehalt von 56 bis 60 Gew.-% hat.

## Claims

1. Use of bismuth compounds as bactericides for electrocoat (EC) materials, wherein the electrocoat materials comprise the bismuth compounds in an amount of from 0.1 to 4% by weight based on their solids.

2. Use according to Claim 1, **characterized in that** the bismuth compounds are selected from the group consisting of bismuth carboxylates.

3. Use according to Claim 1, **characterized in that** the bismuth carboxylates are formed from carboxylic acids selected from the group consisting of aliphatic carboxylic acids and aromatic carboxylic acids.

4. Use according to Claim 3, **characterized in that** apart from the carboxylic acid group the aliphatic carboxylic acids contain no other functional group.

5. Use according to Claim 3 or 4, **characterized in that** the bismuth compound is bismuth ethylhexanoate.

6. Use according to Claim 3, **characterized in that** the bismuth compound is bismuth subsalicylate.

7. Use according to Claim 6, **characterized in that** the bismuth subsalicylate has a bismuth content of from 56 to 60% by weight.

## Revendications

1. Utilisation de composés de bismuth comme bactéricide pour les peintures électrophorétiques par immersion (ETL), les peintures électrophorétiques par immersion contenant les composés de bismuth dans une quantité de 0,1 à 4% en poids par rapport à leurs corps solides.

2. Utilisation selon la revendication 1, **caractérisée en ce que** les composés de bismuth sont sélectionnés dans le groupe des carboxylates de bismuth.

3. Utilisation selon la revendication 1, **caractérisé en ce que** les carboxylates de bismuth sont formés à partir d'acides carboxyliques qui sont sélectionnés à partir du groupe des acides carboxyliques aliphatiques et des acides carboxyliques aromatiques.

4. Utilisation selon la revendication 3, **caractérisée en ce qu'**hormis le groupe carboxylique, les acides carboxyliques aliphatiques ne présentent pas d'autre groupe fonctionnel.

5. Utilisation selon l'une des revendications 3 ou 4, **caractérisée en ce que** le composé de bismuth est de l'éthylhexanoate de bismuth.

6. Utilisation selon la revendication 3, **caractérisée en ce que** le composé de bismuth est du subsalicylate de bismuth.

7. Utilisation selon la revendication 6, **caractérisée en ce que** le subsalicylate de bismuth présente une teneur en bismuth de 56 à 60% en poids.
